Europäisches Patentamt

European Patent Office

Office européen des brevets

(19)

(11) **EP 1 538 734 A2**

(12) **EUROPÄISCHE PATENTANMELDUNG**

(43) Veröffentlichungstag:
08.06.2005 Patentblatt 2005/23

(51) Int Cl.⁷: **H02M 7/219**

(21) Anmeldenummer: **04026469.9**

(22) Anmeldetag: **08.11.2004**

(84) Benannte Vertragsstaaten:
**AT BE BG CH CY CZ DE DK EE ES FI FR GB GR
HU IE IS IT LI LU MC NL PL PT RO SE SI SK TR**
Benannte Erstreckungsstaaten:
**AL HR LT LV MK YU**

(30) Priorität: **03.12.2003 DE 10356514**

(71) Anmelder: **SIEMENS AKTIENGESELLSCHAFT**
**80333 München (DE)**

(72) Erfinder: **Gaksch, Susanne**
**91056 Erlangen (DE)**

(54) **Stromversorgungseinrichtung**

(57)     Die Erfindung bezieht sich auf eine Stromversorgungseinrichtung mit einem netzseitigen Gleichrichter (2) und einem ausgangsseitigen DC/DC-Wandler (6), die gleichspannungsseitig miteinander verknüpft sind, und mit zwei Pufferkondensatoren (8,10), die elektrisch parallel zum Ein- und Ausgang des DC/DC-Wandlers (6) geschaltet sind. Erfindungsgemäß ist elektrisch parallel zu jeder Diode (D1,...,D6) des netzseitigen Gleichrichters (2) ein elektronisch steuerbarer Schalter (T1,...,T6) geschaltet, die steuerungsseitig mit einer Steuereinrichtung (40) versehen sind, an deren Eingängen jeweils eine Phasenspannung (U_u,U_v,U_w) eines speisenden Netzes ansteht, und ist der DC/DC-Wandler (6) symmetrisch aufgebaut. Somit erhält man eine Stromversorgungseinrichtung, die kostengünstiger ist und deren Energiebilanz sich wesentlich verbessert hat.

FIG 3

EP 1 538 734 A2

## Beschreibung

Die Erfindung bezieht sich auf eine Stromversorgungseinrichtung gemäß Oberbegriff des Anspruchs 1.

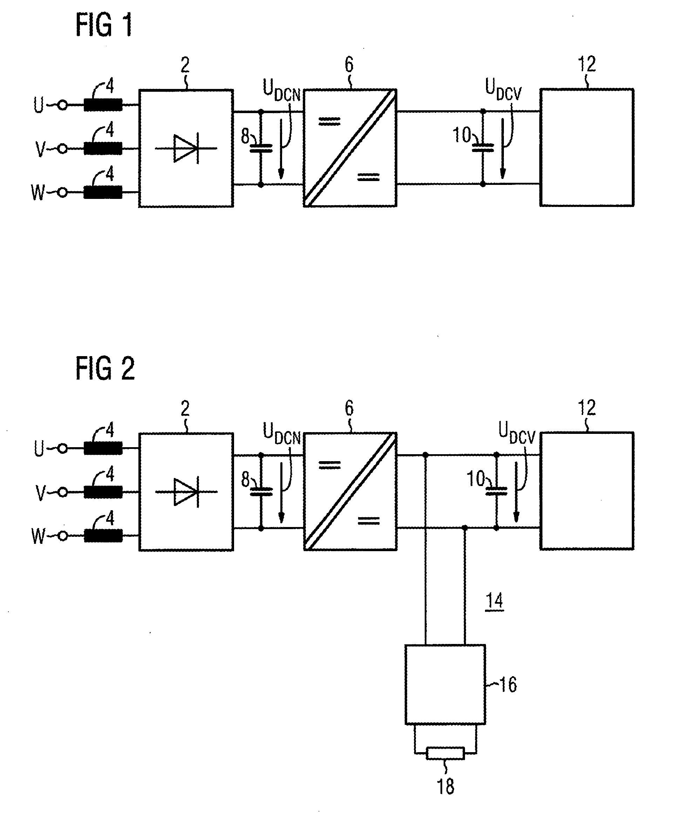

Eine derartige Stromversorgungseinrichtung ist in der FIG 1 näher dargestellt. Diese bekannte Stromversorgungseinrichtung weist eingangsseitig einen Gleichrichter 2 auf, der hier dreiphasig ausgebildet ist. Dieser Gleichrichter 2 ist netzseitig jeweils mittels einer Netzdrossel 4 mit einem Ausgang U, V und W eines nicht näher dargestellten speisenden Netzes verbunden. Diesem netzseitigen Gleichrichter 2 ist gleichspannungsseitig ein DC/DC-Wandler 6 nachgeschaltet. Außerdem weist diese Stromversorgungseinrichtung zwei Pufferkondensatoren 8 und 10 auf, die elektrisch parallel zum Ein- und Ausgang des DC/DC-Wandlers 6 geschaltet sind. Am Pufferkondensator 10 steht eine Gleichspannung $U_{DCV}$ für einen Verbraucher 12 an.

Dieser Verbraucher 12 kann beispielsweise ein wechselrichtergespeister Motor eines Rollenantriebs eines Fördersystems sein. Bei einem derartigen Antrieb ist die Gleichspannung $U_{DCV}$ am Ausgang der Stromversorgungseinrichtung beispielsweise auf 48V geregelt. Das dreiphasige speisende Netz weist eine Phasenspannung von 380V auf. Der Gleichrichter 2, der netzgeführt ist, erzeugt aus diesem Drehstromsystem eine Gleichspannung $U_{DCN}$ mit einer Amplitude von beispielsweise 540V. Damit am Ausgang dieser Stromversorgungseinrichtung eine geregelte Gleichspannung $U_{DCV}$ mit einer Amplitude von 48V anstehen kann, ist der DC/DC-Wandler 6 vorgesehen. Als DC/DC-Wandler 6 kann ein Sperrwandler aber auch ein Flusswandler verwendet werden. Der im Wandler verwendete Spannungstransformator wird derart bemessen, dass aus der anstehenden Gleichspannung $U_{DCN}$ mit einer Amplitude von beispielsweise 540V eine Gleichspannung $U_{DCV}$ mit einer Amplitude von beispielsweise 48V wird. Der Ausgangsspannung $U_{DCN}$ des Gleichrichters 2 ist eine Wechselspannung mit sechsfacher Netzfrequenz überlagert, die mittels eines primärseitigen elektronischen Schalters auf der Sekundärseite des DC/DC-Wandlers 6 ausgeregelt wird. Dazu weist der primärseitige elektronisch steuerbare Schalter einen Schaltregler auf, dem ein Ist- und Sollwert der ausgangsseitigen Gleichspannung $U_{DCV}$ zugeführt wird. Mit einer derartigen Stromversorgungseinrichtung kann aus einer einphasigen oder dreiphasigen Netzspannung eine ausgangsseitige geregelte Gleichspannung $U_{DCV}$ generiert werden, deren Amplitude frei einstellbar ist. Beispielsweise kann die Amplitude um ein vielfaches kleiner sein als eine Amplitude der Phasenspannung des speisenden Netzes.

Wenn der Verbraucher 12 ein gesteuerter Antrieb ist, kann es prozessbedingt vorkommen, dass dieser abgebremst werden muss. Beim Bremsvorgang wird mechanische Energie in den Pufferkondensator 10 der Stromversorgungseinrichtung als elektrische Energie zurückgespeist. Dadurch steigt die Spannung am Pufferkondensator 10 an. Damit eine Überspannung an diesem Kondensator 10 und damit verbundenen Sicherheitsabschaltung des Antriebs verhindert wird, ist eine Bremsschaltung 14 vorgesehen. Eine derartige Stromversorgungseinrichtung ist in der FIG 2 näher dargestellt. Diese Bremsschaltung 14 weist einen Bremssteller 16, auch als Bremschopper bezeichnet, und einen Bremswiderstand 18 auf. Der Bremswiderstand 18 ist elektrisch parallel zum Ausgang des Bremsstellers 16 geschaltet. Mittels dieser Bremsschaltung 14 wird die Spannung am Kondensator 10 auf einen vorbestimmten Wert gehalten, in dem die vom Verbraucher 12 kommende Energie im Bremswiderstand 18 in Wärme umgesetzt wird. Der Bremswiderstand 18 muss derart dimensioniert werden, dass dieser die anfallende rückspeisende Energie in Wärme umsetzen kann. Deshalb muss unter Umständen dieser Widerstand 18 gekühlt werden. Zumindest benötigt dieser einen nicht zuverlässigen Platz.

Der Erfindung liegt nun die Aufgabe zugrunde, die bekannte Stromversorgungseinrichtung derart weiterzubilden, dass auf eine Bremsschaltung verzichtet werden kann.

Damit auf die Bremsschaltung verzichtet werden kann, muss die mechanische Energie als elektrische Energie in das speisende Netz zurückgespeist werden. Dies funktioniert nur dann, wenn die beiden Bestandteile der Stromversorgungseinrichtung für eine Energierichtung vom Verbraucher zum speisenden Netz ausgebildet sind.

Aus der deutschen Patentschrift 199 13 634 sind zwei Maßnahmen bei einem netzseitigen Stromrichter bekannt, um Energie eines Spannungszwischenkreis in ein speisendes Netz zurückspeisen zu können. Eine Maßnahme ist der Austausch des netzgeführten Gleichrichters gegen einen selbstgeführten Pulsstromrichter, auch als Active-Front-End bezeichnet. Der Netzstromrichter ist durch die Verwendung eines derartigen Active-Front-End nahezu sinusförmig, so dass die Netzrückwirkungen minimal sind. Gegenüber dem netzgeführten Gleichrichter ist außerdem seine Ausgangsspannung regelbar. Nachteile sind jedoch die hohen Kosten und der hohe Aufwand. Erst wenn an den Netzrückwirkungen sehr hohe Anforderungen gestellt werden oder eine sehr hohe Bremsenergie anfällt, wird ein derartiges Active-Front-End verwendet.

Eine weitere Maßnahme ist die Verwendung von elektronisch steuerbaren Schaltern, die jeweils elektrisch parallel zu jeder Diode des netzgesteuerten Gleichrichters geschaltet sind. Diese Schalter werden jeweils synchron zu den Leitphasen korrespondierender Dioden gesteuert. Dadurch wird der netzseitige Stromrichter bidirektional für beide Stromrichtungen leitend und ist trotzdem vom netzgeführten, ungesteuerten Typ. Die Leitphasen, die durch die natürlichen Kommutierungszeitpunkte bestimmt werden, werden aus den Phasenspannungen des speisenden Netzes abgeleitet.

Solange nur der Gleichrichter der bekannten Stromversorgungseinrichtung auch für eine Energierichtung von einem Verbraucher zum speisenden Netz ausgebildet ist, wird weiterhin eine Bremsschaltung benötigt, da der DC/DC-Wandler 6 nicht rückspeisefähig ausgebildet ist.

Die Aufgabe der Erfindung wird erfindungsgemäß mit den kennzeichnenden Merkmalen des Anspruchs 1 gelöst.

Damit die bekannte Stromversorgungseinrichtung rückspeisefähig wird, wird einerseits zu jeder Diode des netzseitigen Gleichrichters ein elektronisch steuerbarer Schalter geschaltet, die synchron zu den Leitphasen der zugeordneten netzgeführten Dioden gesteuert werden, und andererseits der DC/DC-Wandler symmetrisch aufgebaut. Durch diesen symmetrischen Aufbau des DC/DC-Wandlers ist die Sekundärseite dieses DC/DC-Wandlers identisch mit seiner Primärseite, wodurch dieser nun rückspeisefähig ist, so dass die Stromversorgungseinrichtung insgesamt rückspeisefähig ist. Somit wird keine Bremsschaltung mehr benötigt, um eine Energie vom Verbraucher kommend zu vernichten. Da diese vom Verbraucher kommende Energie nun in das speisende Netz zurückgespeist werden kann, verbessert sich die Energiebilanz dieser Stromversorgungseinrichtung wesentlich. Außerdem ist die erfindungsgemäße Stromversorgungseinrichtung genüber einer Stromversorgungseinrichtung mit Bremsschaltung erheblich preiswerter.

Bei einer vorteilhaften Ausführungsform der Stromversorgungseinrichtung sind ein primär- und sekundärseitiger Schaltregler des DC/DC-Wandlers potential getrennt mit einem Komplementär-Steuereingang des sekundär- und primärseitigen Schaltreglers verknüpft. Dadurch wird ein sekundär- bzw. primärseitiger elektronisch steuerbarer Schalter in der Leitphase der zugehörigen Diode leitend geschaltet. Dieser Schalter hat eine geringere Durchlassspannung als die Diode, dadurch wird die Verlustleistung reduziert und der Wirkungsgrad verbessert.

Vorteilhafte Ausführungsformen der Stromversorgungseinrichtung sind den Unteransprüchen 3 bis 5 zu entnehmen.

Zur näheren Erläuterung der Erfindung wird auf die Zeichnung Bezug genommen, in der zwei Ausführungsformen der erfindungsgemäßen Stromversorgungseinrichtung schematisch veranschaulicht sind.

FIG 1     zeigt eine bekannte Stromversorgungseinrichtung, in der

FIG 2     ist die Stromversorgungseinrichtung nach FIG 1 mit einer Bremsschaltung veranschaulicht, die

FIG 3     zeigt eine erste Ausführungsform der Stromversorgungseinrichtung nach der Erfindung, wobei in der

FIG 4     eine zweite Ausführungsform der erfindungsgemäßen Stromversorgungseinrichtung dargestellt ist.

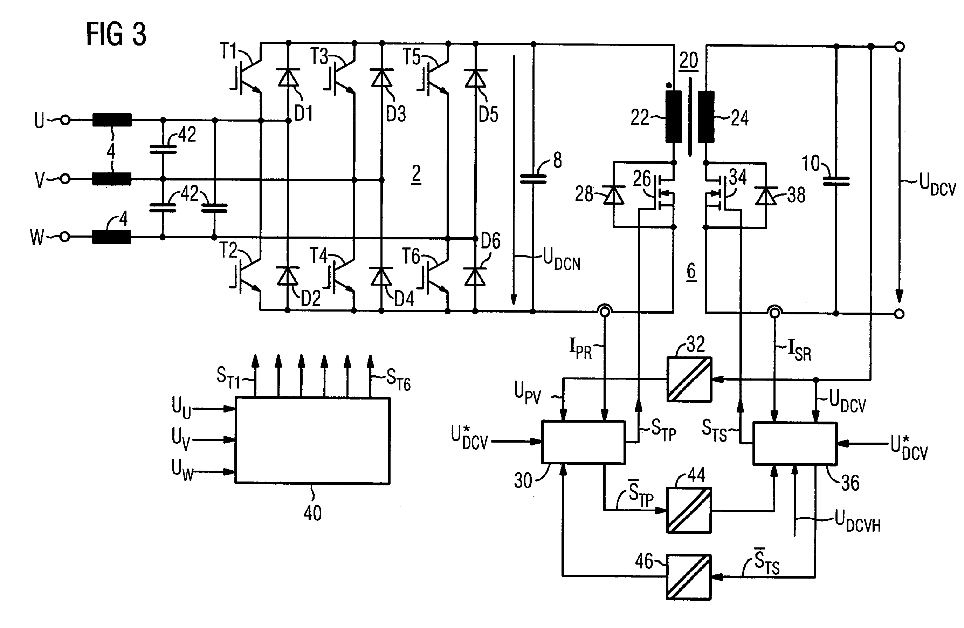

In der FIG 3 ist eine erste Ausführungsform der erfindungsgemäßen Stromversorgungseinrichtung näher dargestellt. Bei dieser ersten Ausführungsform ist als DC/DC-Wandler 6 ein Sperrwandler vorgesehen, der erfindungsgemäß weitergebildet ist. Der DC/DC-Wandler 6 weist einen Spannungstransformator 20 mit einer Primär- und Sekundärwicklung 22 und 24 auf. Primärseitig ist elektrisch in Reihe zur Primärwicklung 22 ein elektronisch steuerbarer Schalter 26 geschaltet. Elektrisch parallel zu dieser Reihenschaltung ist der Pufferkondensator 8 geschaltet. Elektrisch antiparallel zu diesen elektronisch steuerbaren Schalter 26 ist eine Diode 28 geschaltet. Damit dieser Schalter 26 getaktet angesteuert werden kann, ist ein handelsüblicher Schaltregler 30 vorgesehen. Zur Generierung eines Steuersignals $S_{TP}$ benötigt dieser handelsüblicher Schaltregler 30 einen Spannungs-Sollwert $U^*_{DCV}$ und einen Spannungs-Istwert $U_{DCV}$, der sekundärseitig erfasst und potentialgetrennt zum primärseitigen Schaltregler 30 übermittelt wird. Zur potentialtrennenden Übermittlung wird ein Optokoppler 32 verwendet.

Da dieser DC/DC-Wandler 6 erfindungsgemäß symmetrisch aufgebaut werden soll, muss der sekundärseitige Stromkreislauf dem primärseitigen Stromkreislauf entsprechen. Deshalb ist ebenfalls elektrisch in Reihe zur Sekundärwicklung 24 des Spannungswandlers 20 ein elektronisch steuerbarer Schalter 34 geschaltet. Diese Reihenschaltung ist ebenfalls elektrisch parallel zum Pufferkondensator 10 geschaltet. Auch dieser Schalter 34 weist steuerungsseitig einen handelsüblichen Schaltregler 36 auf. Elektrisch antiparallel zum elektronisch steuerbaren Schalter 34 ist ebenfalls eine Diode 38 geschaltet. Ebenso benötigt dieser sekundärseitige Schaltregler 36 zur Generierung eines sekundärseitigen Steuersignals $S_{TS}$ einen Spannungs-Sollwert $U^*_{DCV}$ und einen Spannungs-Istwert $U_{DCV}$. Durch diese erfindungsgemäße Ausgestaltung des DC/DC-Wandlers 6 ist dieser nun rückspeisefähig.

Der netzseitige Gleichrichter 2 ist in dieser Ausführungsform dreiphasig ausgebildet, da als speisendes Netz ein Drehstromnetz vorgesehen ist. Aus Übersichtlichkeitsgründen sind nur die Netz-Anschlüsse U, V und W dargestellt. Wenn diese Stromversorgungseinrichtung an ein einphasiges Netz angeschlossen werden soll, so weist der Gleichrichter 2 nur eine H-Brücke auf. In der dargestellten Ausführungsform weist der Gleichrichter 2 als Stromrichterventile Dioden D1 bis D6 auf, von denen jeweils zwei einen Brückenzweig bilden. Gemäß der Erfindung ist jeder Diode D1 bis D6 ein elektronisch steuerbarer Schalter T1 bis T6 elektrisch antiparallel geschaltet. Als elektronisch steuerbarer Schalter T1 bis T6 sind **I**nsulated-**G**ate-**B**ipolare-**T**ransistoren (IGBT) vorgesehen. Jeder Schalter T1 bis T6 ist steuerungsseitig mit einem Steuerausgang einer Steuereinrichtung 40 verbunden. An diesen Steuerausgängen stehen Steuersignale $S_{T1}$ bis $S_{T6}$ an, mit denen die elektronisch steuerbaren Schalter T1 bis T6 jeweils zu den Leitphasen der korrespondierenden Dioden D1 bis D6 synchron gesteuert werden. Um diese Leitphasen zu ermitteln, sind der Steuereinrichtung 40 die Phasenspannungen $U_U$, $U_V$ und $U_W$ des speisenden Netzes zugeführt. Die Leitphasen der Dioden D1 bis D6 sind durch die natürlichen Kommutierungszeitpunkte (Schnittpunkte zweier Phasenspannungsverläufe) gekennzeichnet. Außerdem weist gemäß der DE 199 13 634 C2, insbesondere die FIG 10, dieser rückspeisefähige Gleichrichter 12 eingangsseitig netzseitige Kondensatoren 42 auf, die jeweils zwischen zwei Phasen des Netzes angeordnet sind. Mit diesen Kondensatoren 42 wird verhindert, dass Spannungseinbrüche im Netz nicht über ein vorbestimmtes Maß hinausgehen.

Durch die rückspeisefähige Ausgestaltung des netzseitigen Gleichrichters 2 und des ausgangsseitigen DC/DC-Wandlers 6 erhält man eine rückspeisefähige Stromversorgungseinrichtung, deren Energiebilanz sich wesentlich verbessert hat. Außerdem ist diese Stromversorgungseinrichtung gegenüber einer bekannten Stromversorgungseinrichtung mit Bremsschaltung auch kostengünstiger.

In der Ausführungsform der Stromversorgungseinrichtung gemäß FIG 2 sind noch zwei weitere Optokoppler 44 und 46 dargestellt. Mittels des Optokopplers 44 wird ein komplementäres Steuersignal $\bar{S}_{TP}$ zum Steuersignal $S_{TP}$ für den primärseitigen elektronisch steuerbaren Schalter 26 potential getrennt zum sekundärseitigen Schaltregler 36 übertragen. Das komplementäre Steuersignal $\bar{S}_{TS}$ zum Steuersignal $S_{TS}$ für den sekundärseitigen elektronisch steuerbaren Schalter 34 wird mittels dem Optokoppler 46 potential getrennt zum primärseitigen Schaltregler 30 übertragen. In Abhängigkeit des komplementären Steuersignals $\bar{S}_{TP}$ bzw. $\bar{S}_{TS}$ wird dem sekundärseitigen Schalter 34 bzw. dem primärseitigen Schalter 26 zu den Leitphasen der zugehörigen Diode 38 bzw. 28 angesteuert. Um diese Leitphase der Diode 38 bzw. 28 zu erkennen wird neben dem komplementären Steuersignal $\bar{S}_{TP}$ bzw. $\bar{S}_{TS}$ auch noch die Stromrichtung im sekundären bzw. primären Stromkreislauf des DC/DC-Wandlers 6 benötigt. Deshalb weisen diese beiden Stromkreise jeweils eine Stromerfassungseinrichtung 45 bzw. 47 auf. Das ermittelte Stromrichtungs-Signal $I_{SR}$ bzw. $I_{PR}$ wird dem Schaltregler 36 bzw. 30 zugeführt. In Abhängigkeit dieser anstehenden Signalen $\bar{S}_{TP}$ und $I_{SR}$ bzw. $\bar{S}_{TS}$ und $I_{PR}$ wird ebenfalls der elektronisch steuerbare Schalter 34 bzw. 26 angesteuert, wodurch dieser synchron zur Leitphase der korrespondierenden Diode 38 bzw. 28 leitend ist. Da dieser Schalter 26 bzw. 34 eine geringere Durchlassspannung als die zugehörige Diode 28 bzw. 38, reduziert sich die Verlustleistung, wodurch sich der Wirkungsgrad verbessert.

Anhand dieser Ausführungsform soll die Funktionsweise der Stromversorgungseinrichtung nach der Erfindung kurz erläutert werden:

Mittels des netzseitigen Gleichrichters 2 wird aus einer anstehenden Spannung eines speisenden Netzes beispielsweise mit einer Amplitude von 380V eine gleichgerichtete Spannung $U_{DCN}$ mit einer Amplitude von etwa 540V generiert. Die vom Verbraucher 12 benötigte Gleichspannung $U_{DCV}$ soll nur eine Amplitude von beispielsweise 48V haben. Aus diesem Grund ist dem Gleichrichter 2 der DC/DC-Wandler 6 nachgeschaltet, dessen Spannungstransformator 20 ein Übersetzungsverhältnis ü aufweist, das aus primärseitigen 540V sekundärseitig 48V erzeugt. Rechnerisch ergibt sich das Übersetzungsverhältnis ü zu 11,25. Bei einem Übersetzungsverhältnis von ü = 11 und Taktverhältnis 1:1 steht sekundärseitig eine Spannung von $U_{DCV}$ = 49V an. Bei einem Übersetzungsverhältnis ü = 12 und Taktverhältnis 1:1 stellt sich sekundärseitig eine Spannung $U_{DCV}$ von 45V ein. Außerdem weist die gleichgerichtete Spannung $U_{DCN}$ am Pufferkondensator 8 einen Wechselspannungsanteil auf, der die sechsfache Netzfrequenz als Wechselspannungsfrequenz aufweist. Ferner ist die Wechselspannung des speisenden Netzes nicht immer konstant, sondern kann in vorgegebenen Grenzen schwanken. All diese Faktoren sorgen dafür, dass die Verbraucherspannung $U_{DCV}$ am Pufferkondensator 10 nicht exakt die geforderte 48V Spannungsamplitude aufweist. Aus diesem Grund wird mit dem primärseitigen elektronisch steuerbaren Schalter 26 mit zugeordneten Schaltregler 30 in Abhängigkeit eines Spannungs-Sollwertes $U^*_{DCV}$ und eines gemessenen Spannungs-Istwertes $U_{DCV}$ die Verbraucherspannung $U_{DCV}$ am Pufferkondensator 10 auf den vorbestimmten Sollwert $U^*_{DCV}$ = 48V geregelt. Solange die Verbraucherspannung $U_{DCV} \leq$ 48V ist, steuert der handelsübliche Schaltregler 30, beispielsweise der Schaltregler UC384X, den primärseitigen Schalter 26, so dass Energie aus dem speisenden Netz über den Gleichrichter 2 und den DC/DC-Wandler 6 zum Verbraucher 12 fließen kann.

Wird prozessbedingt der Verbraucher 12 abgebremst, d.h., der Verbraucher 12 speist nun Energie in den ausgangsseitigen Pufferkondensator 10 der Stromversorgungseinrichtung, steigt dessen Spannung an. Übersteigt diese anstehende Spannung $U_{DCV}$ den vorbestimmten Spannungs-Sollwert $U^*_{DCV}$ um einen vorbestimmten Hysteresewert $U_{DCVH}$, so generiert der sekundärseitige Schaltregler 36 das Steuersignal $S_{TS}$, mit dem der sekundärseitige Schalter 34 angesteuert wird. Dieser sekundärseitige Schaltregler 36 bleibt solange aktiv, bis die Verbraucherspannung $U_{DCV} < U^*_{DCV}$ + $U_{DCVH}$. Da mittels des sekundärseitigen Schalters 34 nur die ansteigende Verbraucherspannung $U_{DCV}$ begrenzt werden soll, d.h., eine vom Verbraucher 12 rückspeisende Energie abgebaut werden soll, wird der Schaltregler 36 nur gesteuert. Da der netzseitige Gleichrichter 2 ebenfalls rückspeisefähig ausgebildet ist, wird die vom Verbraucher 12 speisende Energie in das speisende Netz zurückgespeist. Da der rückspeisefähige Gleichrichter 2 zu jedem Zeitpunkt in beiden Stromrichtungen den Strom führen kann, benötigt dieser nicht ein Zustandssignal, das angibt, das Energie vom Verbraucher 12 in Richtung Netz fließt.

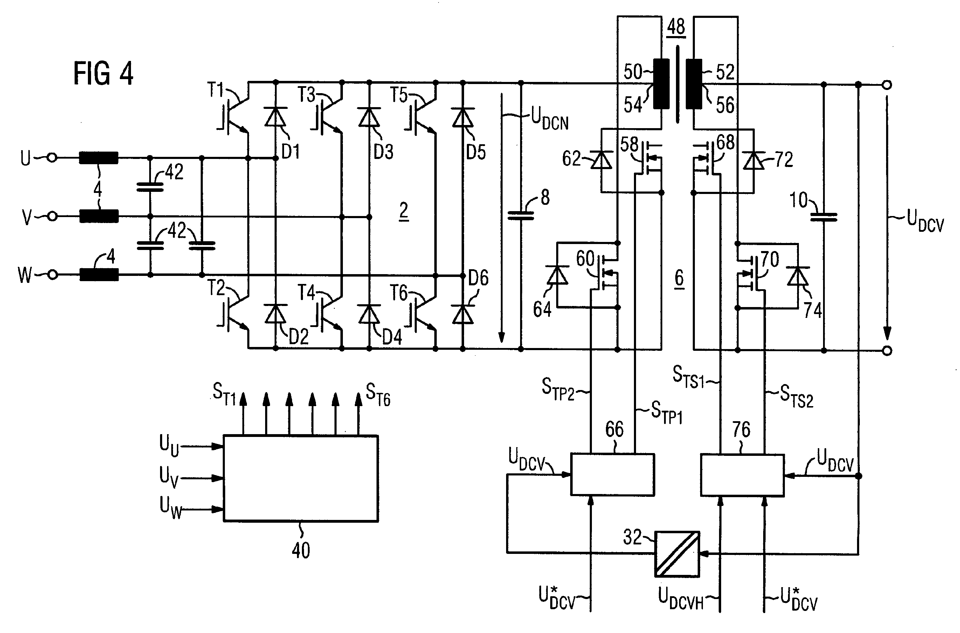

In der FIG 4 ist eine zweite Ausführungsform der Stromversorgungseinrichtung nach der Erfindung schematisch dargestellt. Diese zweite Ausführungsform unterscheidet sich von der ersten Ausführungsform gemäß FIG 3 nur dadurch, dass als DC/DC-Wandler 6 anstelle eines Sperrwandlers ein Flusswandler vorgesehen ist. Dieser DC/DC-Wandler 6 weist ebenfalls einen Spannungstransformator 48 auf, der gegenüber dem Spannungstransformator 20 eine Primär- und eine Sekundärwicklung 50 und 52 jeweils mit einem Mittenabgriff 54 und 56 aufweist. An diesem Mittenabgriff 54 der Primärwicklung 50, der einen Eingangs-Anschluss des DC/DC-Wandlers 6 bildet, ist ein positiver Anschluss des Pufferkondensators 8 angeschlossen. Jedes Ende der Primärwicklung 50 ist mittels eines elektronisch steuerbaren Schalters 58 und 60 mit einem negativen Anschluss des Pufferkondensators 8 elektrisch leitend verbunden. Elektrisch antiparallel zum Schalter 58 bzw. 60 ist eine Diode 62 bzw. 64 geschaltet. Die beiden elektronisch steuerbaren Schalter 58 und 60 sind außerdem steuerungsseitig mit einem handelsüblichen Schaltregler 66 verknüpft. Dieser handelsübliche Schaltregler 66 generiert in Abhängigkeit eines potentialgetrennt übertragenen gemessenen Spannungs-Istwertes $U_{DCV}$ und eines vorbestimmten Spannungs-Sollwertes $U^*_{DCV}$ für eine Verbraucherspannung $U_{DCV}$ für diese beiden Schalter 58 und 60 Steuersignale $S_{TP1}$ und $S_{TP2}$. Somit entspricht dieser Primärschaltkreis dem Primärschaltkreis eines handelsüblichen Flusswandlers.

Da erfindungsgemäß der DC/DC-Wandler 6 symmetrisch aufgebaut sein soll, weist der Sekundärschaltkreis dieses Flusswandlers ebenfalls zwei elektronisch steuerbare Schalter 68 und 70 auf, denen jeweils antiparallel eine Diode 72 und 74 geschaltet sind. Der Mittenabgriff 56 der Sekundärwicklung 52 bildet einen Ausgangs-Anschluss des Flusswandlers, wobei der Verbindungspunkt der beiden elektronisch steuerbaren Schalter 68 und 70 einen zweiten Ausgangs-Anschluss des Flusswandlers bildet. An diesen beiden Ausgangs-Anschlüssen ist der ausgangsseitige Pufferkondensator 10 angeschlossen, an dem eine geregelte Verbraucherspannung $U_{DCV}$ ansteht. Die beiden sekundärseitigen Schalter 68 und 70 sind steuerungsseitig mit einem handelsüblichen Schaltregler 76 verknüpft, an deren Steuerausgängen zwei Steuersignale $S_{TS1}$ und $S_{TS2}$ anstehen. Diesen sekundärseitigen Schaltregler 76 ist wie bei der Ausführungsform gemäß FIG 3 ein gemessener Spannungs-Istwert $U_{DCV}$, ein vorbestimmter Spannungs-Sollwert $U^*_{DCV}$ und ein Hysteresewert $U_{DCVH}$ zugeführt. Dieser DC/DC-Wandler 6 wird genau so betrieben wie der DC/DC-Wandler 6 der Ausführungsform gemäß FIG 3.

Eine derartig geregelte Gleichspannung kann beispielsweise als zentrale Spannungsversorgung wechselrichtergespeiste Motoren eines Rollenantriebs eines Fördersystems verwendet werden. Die Anzahl der wechselrichtergespeisten Motoren, die gemeinsam an dieser geregelten Gleichspannung angeschlossen sind, hängt von der geforderten Leistung dieser Motoren ab. Um ein Fördergut bei kleinsten Taktzeiten zu positionieren bzw. auf andere Förderstrecken umzusetzen, sind schnelle Bremsvorgänge erforderlich, bei denen mechanische Energie in die zentrale Einspeisung als elektrische Energie zurückgespeist wird. Da die Motoren wenigstens eines Rollantriebsmoduls des Fördersystems winkelgenau betrieben werden, müssen bei einem Bremsvorgang auch diese winkelgenau betriebenen Antriebe gleichzeitig abgebremst werden. D.h., die rückzuspeisende Energie kann nicht von Antrieben verbraucht werden. Zur Vermeidung von Überspannungen an der zentralen Einspeisung wird gemäß FIG 2 eine Bremsschaltung verwendet. Da in modernen Fördersystemen die Förderstrecken aus einzelnen Rollantriebsmodulen zusammengesetzt sind, erhält man einen sehr kompakten Aufbau, der durch eine vorgesehene Bremsschaltung gestört wird.

Wird diese erfindungsgemäße Stromversorgungseinrichtung als zentrale Einspeisung eines dezentralen Antriebssystems für ein Fördersystem verwendet, so erhält man ein sehr kompaktes Fördersystem, deren Module (Rollantriebsmodule, Stromversorgungseinrichtung, Steuerung) nur noch miteinander mechanisch und elektrisch verknüpft werden müssen. Durch die erfindungsgemäße Ausgestaltung der Stromversorgungseinrichtung wird keine Bremsschaltung mehr benötigt, deren Bremswiderstände nicht nur teuer sind, sondern auch einen hinreichenden Platz beanspruchen, der besonders bei modulartig aufgebauten Fördersystemen nicht immer vorhanden ist bzw. anderweitig verwendet werden könnte. Außerdem weist ein derartiges Fördersystem, das eine Stromversorgungseinrichtung gemäß der Erfindung als zentrale Einspeisung für dezentrale wechselrichtergespeiste Motoren verwendet, einen Kostenvorteil auf, der dem Kunden zu Gute kommt.

**Patentansprüche**

1. Stromversorgungseinrichtung mit einem netzseitigen Gleichrichter (2) und einem ausgangsseitigen DC/DC-Wandler (6), die gleichspannungsseitig miteinander verknüpft sind, und mit zwei Pufferkondensatoren (8,10), die elektrisch parallel zum Ein- und Ausgang des DC/DC-Wandlers (6) geschaltet sind, **dadurch gekennzeichnet, dass** elektrisch parallel zu jeder Diode (D1,...,D6) des netzseitigen Gleichrichters (2) ein elektronisch steuerbarer Schalter (T1,...,T6) geschaltet ist, die steuerseitig mit einer Steuereinrichtung (40) versehen sind, an deren Eingängen jeweils eine Phasenspannung ($U_U, U_V, U_W$) eines speisenden Netzes ansteht und das der DC/DC-Wandler (6) symmetrisch aufgebaut ist.

2. Stromversorgungseinrichtung nach Anspruch 1, **dadurch gekennzeichnet, dass** ein primär- und sekundärseitiger Schaltregler (30,36) des DC/DC-Wandlers (6) potential getrennt mit einem Komplementär-Steuereingang des sekundär- und primärseitigen Schaltreglers (36,30) verknüpft sind.

3. Stromversorgungseinrichtung nach Anspruch 1 oder 2, **dadurch gekennzeichnet, dass** der DC/DC-Wandler (6) ein Sperrwandler ist.

4. Stromversorgungseinrichtung nach Anspruch 1 oder 2, **dadurch gekennzeichnet, dass** der DC/DC-Wandler (6) ein Flusswandler ist.

5. Stromversorgungseinrichtung nach einem der vorgenannten Ansprüche, **dadurch gekennzeichnet, dass** als primär- und sekundärseitige Schalter (26,34,58,60,68,70) des DC/DC-Wandlers (6) jeweils ein MOSFET vorgesehen sind.

6. Stromversorgungseinrichtung nach einem der vorgenannten Ansprüche, **dadurch gekennzeichnet, dass** als elektronisch steuerbarer Schalter (T1,..., T6) des netzseitigen Gleichrichters (2) ein Insulated-Gate-Bipolare-Transistor vorgesehen ist.

7. Verwendung der Stromversorgungseinrichtung nach einem der vorgenannten Ansprüche als zentrale Einspeisung eines dezentralen Antriebssystems eines Fördersystems.

**FIG 1**

**FIG 2**

7

FIG 3

EP 1 538 734 A2

FIG 4

$U_{DCN}$

$U_{DCV}$

48

50 52
54 56

62 58 68 72

60 70
64 74

$S_{TP2}$ $S_{TS1}$ $S_{TS2}$

$S_{TP1}$

$U_{DCV}$ 66 76 $U_{DCV}$

$S_{T1}$ $S_{T6}$

$U_U$

$U_V$

$U_W$

40

$U^*_{DCV}$ $U_{DCVH}$ $U^*_{DCV}$

32

EP 1 538 734 A2